# EUROPÄISCHE PATENTSCHRIFT

(11) **EP 2 044 497 B1**
(45) Veröffentlichungstag und Bekanntmachung des Hinweises auf die Patenterteilung: **20.10.2010**
(21) Anmeldenummer: 07785981.7
(22) Anmeldetag: 10.07.2007
(51) Int. Cl.: G05D 1/02, G01P 13/02

(54) **VERFAHREN UND VORRICHTUNG ZUR FAHRTRICHTUNGSERKENNUNG EINES KRAFTFAHRZEUGS**
METHOD AND DEVICE FOR THE IDENTIFICATION OF THE DIRECTION OF TRAVEL OF A MOTOR VEHICLE
PROCÉDÉ ET DISPOSITIF D'IDENTIFICATION DU SENS DE MARCHE D'UN VÉHICULE AUTOMOBILE

(30) Priorität: 17.07.2006 DE 102006033305; 18.08.2006 DE 102006038829; 20.01.2007 DE 102007003013
(43) Veröffentlichungstag der Anmeldung: 08.04.2009
(73) Patentinhaber: VOLKSWAGEN AG, 38436 Wolfsburg (DE)
(72) Erfinder: BERKNER, Stefan, 38518 Gifhorn (DE); BROSIG, Stefan, 29386 Hankensbüttel (DE); ULLRICH, Manfred, 30982 Vardegötzen (DE); ROHLFS, Michael, 38531 Rötgesbüttel (DE); HAGERODT, Arnd, 37186 Moringen (DE)
(86) Internationale Anmeldenummer: PCT/EP2007/006119
(87) Internationale Veröffentlichungsnummer: WO 2008/009377

(56) Entgegenhaltungen:
- EP-A- 0 492 642
- EP-A1- 1 662 353
- DE-A1- 19 640 760

## Beschreibung

Die Erfindung betrifft ein Verfahren und eine Vorrichtung zur Fahrtrichtungserkennung eines Kraftfahrzeugs.

Die Fahrtrichtung des Kraftfahrzeugs wird bei Kraftfahrzeugen im Stand der Technik beispielsweise aus den Signalen von drehrichtungserkennenden Radimpulsgebern ermittelt.

Aus der DE 37 44 159 A1 ist weiterhin bekannt, eine Fahrtrichtung aus einer Integration der Längsbeschleunigung zu ermitteln. Anhand des Vorzeichens der Geschwindigkeit kann auf die Fahrtrichtung geschlossen werden.

Aus der DE 196 40 760 A1 ist ein Induktivgeber bekannt, wobei zwei getrennt angeordnete Geber mit Induktivspulen beim Überstreichen zwei phasenverschobene sinusförmige Wechselspannungen abgeben und eine Auswerteschaltung aus der Phasenlage der Geberspannungen die Fahrtrichtung eines Kraftfahrzeuges bestimmt.

Bei geringen Geschwindigkeiten und bei einem Kriechen, d.h. bei einem langsamen Vorschieben des Fahrzeugs, kann die Fahrtrichtung nicht gut und demzufolge auch nicht genau bestimmt werden, insbesondere dann nicht, wenn nur impulsgebende Raddrehzahlsensoren Verwendung finden, die kein Zusatzsignal über die Drehrichtung des Rades erzeugen. Eine Fahrtrichtungsbestimmung durch Integration über einen relativ langen Zeitraum ist aufgrund des vorhandenen Grundrauschens der Signale und ggf. von vorhandenem Signal-Offset fehleranfällig.

Die technische Aufgabe der Erfindung ist es, ein Verfahren und eine Vorrichtung zur Fahrtrichtungsbestimmung zu schaffen, mit dem eine zuverlässige Fahrtrichtungsbestimmung bei geringen Geschwindigkeiten möglich ist.

Die Aufgabe wird erfindungsgemäß durch ein Verfahren mit den Merkmalen des Patentanspruchs 1 sowie durch eine Vorrichtung mit den Merkmalen des Patentanspruchs 10 gelöst. Vorteilhafte Ausgestaltungen der Erfindung ergeben sich aus den Unteransprüchen.

Der Erfindung liegt die Erkenntnis zugrunde, dass insbesondere bei Fahrt mit geringer Geschwindigkeit die Signale der Raddrehzahlsensoren der Fahrzeugräder zueinander in einer definierten Phasenbeziehung stehen. Diese Phasenbeziehung kann sich, aufgrund Kurvenfahrten und unterschiedlichen Radabrollumfängen ändern. Diese Änderung ist jedoch stetig und langsam gegenüber der Musterwiederholrate und behindert die Mustererkennung nicht. Die Abfolge dieser Signale ist zeitlich umgekehrt, sofern sich die Fahrtrichtung ändert. Diese Unstetigkeit des Musters ist spezifisch für eine Fahrtrichtungsänderung.

Somit lässt sich die Fahrtrichtung durch Erfassen von mindestens einem Istsignal von mindestens jeweils zwei, insbesondere drei oder vier, Raddrehzahlsensoren des Kraftfahrzeugs und Bilden der zeitlichen Abfolge der erfassten Istsignale, sowie dem Vergleichen der aktuellen Istsignalabfolge mit einer aus vorhergehenden Zeitschritten gebildeten Sollsignalabfolge für mindestens eine Fahrtrichtung in Abhängigkeit des Vergleichs bestimmen. Es wird also mit anderen Worten ein Vergleich der auftretenden Signalmuster über einen gewissen Zeitraum oder über eine gewisse Anzahl von Impulsen vorgenommen. Dadurch ist eine einfache Fahrtrichtungsbestimmung mit impulsgebenden Drehzahlsensoren ohne Richtungsinformation möglich.

Aufgrund der Tatsache, dass die Räder unterschiedliche Radabrollumfänge besitzen sowie die Raddrehzahlsensoren eine endliche Genauigkeit bzw. eine Toleranz aufweisen sowie die Räder zum Teil auf unterschiedlichen Kurvenradien fahren, kommt es während der Fahrt vor, dass sich in einem bestimmten Zeitabschnitt bzw. zu einem Zeitpunkt ein Sensorsignalimpuls zeitlich vor einen anderen Sensorsignalimpuls schiebt bzw., je nach Betrachtungsweise, der andere Impuls zurückfällt. Es ist somit vorteilhaft, dass nicht nur mit der kompletten Übereinstimmung der Istsignalabfolge mit der Sollsignalabfolge die Fahrtrichtung bestimmt wird, sondern auch, dass bei Einhaltung einer maximal zulässigen Abweichung der Ist- mit der Sollsignalabfolge die fahrtrichtung festgelegt wird. Vorteilhafterweise wird somit ein fehlertoleranter Mustervergleich zu einem vorhergehenden Muster zur Fahrtrichtungsbestimmung zugelassen.

Um die Istsignalabfolge unempfindlicher gegen ein auftretendes Signalrauschen zu machen, ist es vorteilhaft, die Istsignalabfolge über mindestens zwei, insbesondere drei, vier oder fünf Zyklen zu bestimmen, wobei ein Zyklus durch den Ablauf einer festgelegten Zeit oder über eine festgelegte Anzahl von Signalen mindestens eines Raddrehzahlsensors definiert ist. Sofern sich ein Muster im Sinne einer Signalabfolge für eine Fahrtrichtung in einem Zyklus überwiegend wiederholt, liegt mit hoher Wahrscheinlichkeit die zu diesem Muster zugehörige Fahrtrichtung vor. Die Aussagezuverlässigkeit erhöht sich somit mit Erfassung mehrerer Signalzyklen, so dass es vorteilhaft ist, die Anzahl der Erfassungszyklen abhängig von den erfassten oder erwarteten Abweichungen zu gestalten. Wenn die Fahrtrichtung nach mindestens zwei Erfassungsabfolgen bereits eindeutig vorliegt, kann eine zuverlässige Aussage darüber getroffen werden. Wenn jedoch eine zweite Messung der Abfolge eine Abweichung von der Sollsignalabfolge ergibt, wird in einer Ausgestaltung der Erfindung die Messzyklenanzahl in Abhängigkeit einer erfassten Abweichung festgelegt. Als Messzyklus wird die einmalige Erfassung von einem Signal jeweils eines Raddrehzahlsensors bezeichnet.

Weiterhin vorteilhaft ist es, die maximal zulässige Abweichung der Ist- von der Sollsignalabfolge abhängig von dem eingeschlagenen Lenkwinkel zu gestalten. Aufgrund der unterschiedlichen zurückgelegten Fahrstrecken der außen- und innenliegenden Räder während der Kurvenfahrt, ist die Änderung der Sollsignalabfolge bei Beibehaltung der Fahrparameter bzw. der Fahrtrichtung absehbar.

Es ist zusätzlich vorteilhaft, sofern die neu ermittelte Sollsignalabfolge als Sollsignalabfolge für eine Fahrtrichtung abgespeichert und in den darauf folgenden Vergleichen zur Fahrtrichtungsermittlung zugrunde gelegt wird. Vorteilhafterweise sollte die neue Sollsigrialabfolge aufgrund der durchgeführten Messungen mehrfach bestätigt sein.

Weiterhin vorteilhaft ist es, wenn die bei Stillstand und/oder bei Abstellung der Zündung und/oder nach einer definierten Fahrtstrecke des Kraftfahrzeugs eine der zuletzt erfassten Istsignalfolgen als neue Sollsignalabfolge für die ermittelte Fahrtrichtung gespeichert wird und beim Wiederstart des Fahrzeugs bzw. bei Wiederanfahrt als Sollsignalabfolge zur Verfügung steht.

Wenn eine neue Sollsignalfolge gespeichert wird, kann gleichzeitig die Sollsignalfolge für die entgegengesetzte Fahrtrichtung gespeichert werden, indem die neue Sollsignalabfolge in zeitlich umgekehrter Reihenfolge des Auftretens der Signale gespeichert wird.

In einer vorteilhaften Ausbildung der Erfindung werden zur Fahrtrichtungserkennung nur Istsignale von Raddrehzahlsensoren von nicht angetriebenen Fahrzeugachsen verwendet. Dies hat den Vorteil, dass ein etwaiger Schlupf an den Fahrzeugrädern unberücksichtigt bleibt. Die Verwendung von Raddrehzahlsensorsignalen von angetriebenen Achsen könnte zu einer verfälschten Fahrtrichtungsinformation und/oder einer verfälschten zurückgelegten Weginformation führen.

In einer weitere Ausgestaltung der Erfindung wird die Fahrtrichtungserkennung bei einem aktiven ABS-, ASR- oder ESP-Eingriff an den Fahrzeugrädern ausgesetzt oder zurückgesetzt. Dieses hat den Vorteil, dass ein auftretender Schlupf zwischen den Rädern und der Fahrbahn unberücksichtigt bleibt. Bei Eingriffen der genannten Systeme ist die Wahrscheinlichkeit sehr hoch, dass ein Schlupf auftritt, so dass die Ausblendung der Erfassung während derartiger Betriebszustände des Fahrzeugs auch Fehler während dieser Zeit ausblendet oder reduziert.

Ferner wird eine Vorrichtung zur Fahrtrichtungserkennung eines Kraftfahrzeugs geschaffen, mit mindestens zwei, insbesondere drei oder mindestens vier, Raddrehzahlsensoren. Zu dieser gehört weiterhin eine Auswerteeinrichtung, die Istsignale erfasst, Istsignalabfolgen aus den erfassten Signalen bildet und mit Sollsignalabfolgen vergleicht. Eine Bestimmung der Fahrtrichtung erfolgt dann in Abhängigkeit des Ergebnisses des Vergleichs.

Die Erfindung wird anhand der folgenden Figuren beispielhaft näher beschrieben.

Die Figuren zeigen:
Figur 1: Schematische Fahrzeugdarstellung
Figur 2a: Signale von Raddrehzahlimpulssensoren bei Vorwärtsfahrt,
Figur 2b: Auftragung des Vertrauensgrades über der Zeit bei anliegenden Raddrehzahlimpulsen,
Figur 3: Signale von Raddrehzahlsensoren vor und nach einem Richtungswechsel und
Figur 4: Schematische Darstellung des Verfahrensablaufs zur Fahrtrichtungserkennung.

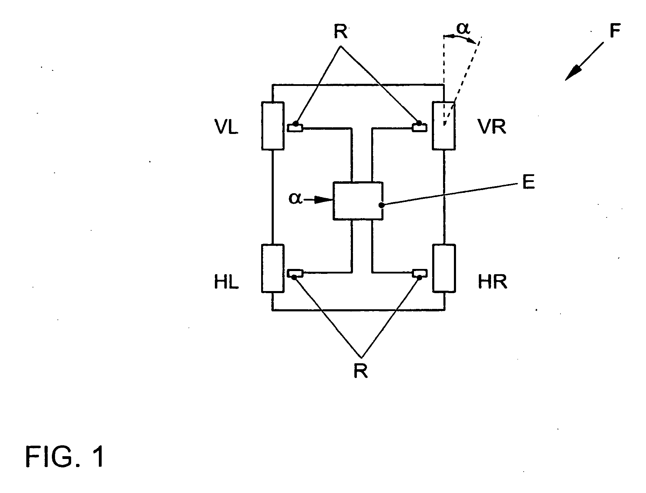

Figur 1 zeigt eine schematische Fahrzeugdarstellung F (Draufsicht) mit Raddrehzahlsensoren R und einer Fahrtrichtungserkennung E. Für die Fahrtrichtungserkennung E können dabei die Signale von zwei, drei oder mindestens vier Raddrehzahlsensoren R in der Fahrtrichtungserkennungsvorrichtung E verwendet werden. Die Signale können dabei beispielsweise auch über ein Bussystem seriell oder parallel zur Fahrtrichtungserkennungsvorrichtung E geleitet werden.

Die Position der Räder des Fahrzeugs F und damit auch der zugehörigen Raddrehzahlsensoren R ist mit VL für vorne links, VR für vorne rechts, HL für hinten links und HR für hinten rechts bezeichnet. Der eingeschlagene Lenkwinkel α des Fahrzeugs F ist in Figur 1 ebenfalls schematisch am rechten Vorderrad eingezeichnet. Der Lenkwinkel kann an den Rädern selbst oder durch einen Sensor an beliebiger Stelle des Lenksystems ermittelt werden, beispielsweise durch einen Lenkwinkelsensor an dem Lenkrad.

Der Lenkwinkel α kann beispielsweise herangezogen werden, um eine geändertes Radimpulsmuster zu plausibilisieren. Sofern mit dem Fahrzeug F eine Kurve durchfahren wird, ist in der Regel ein Lenkwinkel α eingeschlagen. Bei dieser Kurvenfahrt legen die kurvenäußeren Räder eine größere Strecke pro Zeiteinheit zurück als die kurveninneren. Somit sind Raddrehzahlimpulse der kurvenäußeren Raddrehzahlsensoren R in kürzeren Zeitabständen zu erwarten als vor Kurvenfahrt. Das Lenkwinkelsignal α kann auch prädiktiv in die Fahrtrichtungserkennung E einfließen, um die prädiktive Zeitspanne zwischen mindestens zwei Radimpulsen zu bestimmen bzw. um eine wahrscheinliche Änderung im Signalverlauf vorherzusagen. Dazu muss die Abhängigkeit des jeweiligen Raddrehzahlsignals vom Lenkwinkel α und gegebenenfalls von der zurückgelegten Fahrstrecke bekannt sein, beispielsweise abgelegt in Kennfeldern. Beim Fahren von Schlangenlinien ändert sich beispielsweise das Radimpulsmuster der lenkbaren Räder schneller als das Muster der nicht lenkbaren Rädern, deren Änderungsverlauf der Radimpulse eher vergleichmäßigt verläuft. Deshalb ist eine kennfeldabhängige Änderungsvorhersage pro Rad sinnvoll. Anstelle eines Kennfeldes können die Abhängigkeiten selbstverständlich auch über mindestens eine Formel oder über abschnittsweise definierte Funktionen dargestellt werden.

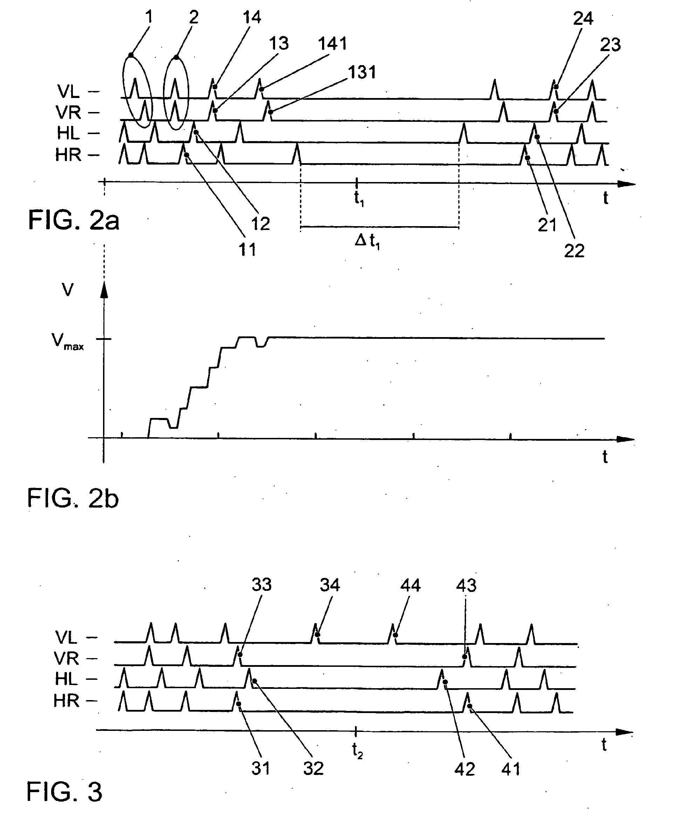

In Figur 2a sind Signale von vier Radimpulssensoren R des Fahrzeugs F zeitlich aufgelöst dargestellt. Die Impulse des Sensors vorne links sind mit VL, die Impulse des Sensors vorne rechts sind mit VR, die Impulse des Sensors hinten links sind mit HL und die Impulse des Sensors hinten rechts sind mit HR bezeichnet. Dies gilt gleichermaßen für Figur 3.

In einem bestimmten Zeitraum treten die Raddrehzahlimpulse 11, 12, 13, und 14 in einer bestimmten zeitlichen Reihenfolge HR, HL, VR und VL auf. Die Raddrehzahlimpulse 13 und 14 der vorderen Räder treten dabei in der Darstellung nahezu zeitgleich auf. Aufgrund unterschiedlicher Strecken, die von den einzelnen Rädern in dem Zeitraum zwischen dem Auftreten der einzelnen Raddrehzahlimpulse zurückgelegt werden, ändert sich bei fortschreitender Zeit der zeitliche Abstand der Signale zueinander.

Dieses kann beispielsweise durch eine Kurvenfahrt bedingt sein, bei der die dem Kurvenmittelpunkt zugewandten Räder eine kürzere Strecke zurücklegen als die dem Kurverimittelpunkt abgewandten Räder. In Figur 2a ist beispielsweise aus diesem Grund der zeitliche Abstand der Signale 14 und 141 des vorderen linken Raddrehzahlsensors sowie der Raddrehzahlsignale 13 und 131 des vorderen rechten Rades unterschiedlich.

Das Fahrzeug F verringert nach dem Auftreten der Raddrehzahlimpulse 11, 12, 13, und 14 kontinuierlich seine Geschwindigkeit und kommt zum Zeitpunkt t1 zum Stillstand. Dieses Fahrverhalten führt zum Aussetzen des Auftretens von Raddrehzahlimpulsen während der Zeitdauer Δt1. Die nach Wiederanfahrt des Fahrzeugs F auftretenden Raddrehzahlimpulse 21, 22, 23 und 24 treten im wesentlichen in einer ähnlichen bzw. in der gleichen zeitlichen Reihenfolge HR, HL, VR und VL auf. Das Fahrzeug F ist somit in der gleichen Fahrtrichtung wiederangefahren.

Erfindungsgemäß wird die nun auftretende Istabfolge der Signale 21, 22, 23, 24 mit einer Sollabfolge für die entsprechende Fahrtrichtung verglichen. Dieser Vergleich kann dabei beispielsweise mit der letzten aufgetretenen Signalabfolge stattfinden. Ein Ähnlichkeitsvergleich zwischen den Signalabfolgen liefert die Aussage, ob sich die Fahrtrichtung geändert hat. Ändert sich die zeitliche Abfolge der Signale gering, beispielsweise weil sich die Auftretensreihenfolge zweier Signale ändert, ist die Wahrscheinlichkeit immer noch sehr hoch, dass es sich um die gleiche Fahrtrichtung handelt. In Figur 2a ist eine solche geringfügige Änderung in den markierten Bereichen 1 und 2 dargestellt.

Für Fahrzeugvorrichtungen, die eine Positionsangabe benötigen, stellt das erfindungsgemäße Verfahren bzw. die erfindungsgemäße Vorrichtung eine wesentliche Verbesserung dar. Insbesondere bei geringen Fahrgeschwindigkeiten gibt es derzeit keine zuverlässigen Positionsdaten. So kann es beispielsweise sein, dass ein Fahrzeug F am Hang trotz Vorwärtsfahrwunsch des Fahrers zunächst rückwärts rollt, bevor es seine Vorwärtsfahrt antritt. Sofern nun die exakte Position des Fahrzeugs F direkt ab Fahrzeugbewegung benötigt wird, beispielsweise bei einem durch einen Parklenkassistenten unterstützten Einparkvorgang, aber auch bei einem Navigationssystem, lässt sich die Positionsbestimmung mit umgehender Fahrtrichtungserkennung durch das vorgestellte Verfahren wesentlich verbessern. Es ist somit umgehend klar, in welcher Fahrtrichtung angefahren und welche Wegstrecke zurückgelegt wurde. Auf den Einsatz von aufwendigeren, fahrtrichtungserkennenden Sensoren kann dabei verzichtet werden.

Das Auftreten der Signale muss mit hinreichender zeitlicher Auflösung erfolgen, um eine sichere Aussage über die zeitliche Reihenfolge des Auftretens der Signale treffen zu können. Daher eignet sich das erfindungsgemäße Verfahren derzeit nur bei geringen Fahrgeschwindigkeiten, bei denen das Erfassungs- und Übertragungssystem der Signale an die Fahrtrichtungserkennung E diese zeitliche Auflösung bereitstellen kann. Da sich jedoch die Fahrtrichtung bei höheren Geschwindigkeiten nicht ändert, kann das erfindungsgemäße Verfahren ab mindestens einem Geschwindigkeitsschwellwert, beispielsweise im wesentlichen ab 5, 7, 10 oder 20 km/h ausgesetzt werden. Die Rechenkapazität des jeweiligen Steuergerätes steht dann für andere Rechenaufgaben zur Verfügung. Die zuletzt ermittelte Fahrtrichtung gilt dann weiterhin.

Um eine Rückmeldung bezüglich der Verlässlichkeit der Fahrtrichtungsaussage zu erhalten, kann zusätzlich ein Parameter eingeführt werden, der angibt, wie vertrauenswürdig die jeweils ermittelte Fahrtrichtung zu einen Zeitpunkt t ist. Der Vertrauensgrad V einer Fahrtrichtungsermittlung ist in Figur 2b über der Zeit t dargestellt. Wird die Fahrtrichtung durch mehrere nacheinanderfolgende Messungen bestätigt, so steigt der Vertrauensgrad V für die Angabe der Fahrtrichtung. Erfolgt ein Wechsel in dem zeitlichen Auftreten der Raddrehzahlsignale, also in dem vorliegenden, aufgetretenem Raddrehzahlmuster, so verringert sich der Vertrauensgrad V. Dieses ist beispielsweise in Figur 2a bei den Signalen im Bereich 1 und 2 zu beobachten. Eine weitere Verringerung des Vertrauengrades V ist auch im Bereich der Signale 131 und 141 zu beobachten, da sich die Auftretensreihenfolge dieser Signale gegenüber den Signalen 13 und 14 geändert hat. Die Signale 13 und 14 treten noch nahezu zeitgleich auf, wohingegen die darauffolgenden Signale 141 und 131 nacheinander detektiert werden. Der Wert des Vertrauensgrads V ist in Fig. 2b auf einen maximalen Vertrauensgrad Vmax begrenzt. Dieser maximale Vertrauensgrad Vmax wird beispielsweise nach 3, 4 oder 5 Messungen erreicht, sofern keine Änderung in der Auftretensreihenfolge der Raddrehzahlimpulse vorliegt.

Figur 3 stellt Signale von Raddrehzahlsensoren R vor und nach einem Richtungswechsel dar. Nach Auftreten der Signale 31, 32, 33 und 34 kommt das Fahrzeug F zum Zeitpunkt t2 zum Stillstand und fährt danach in umgekehrter Fahrtrichtung weiter. Die Signale 44, 43, 42 und 41 der Raddrehzahlsensoren R treten darauf in zeitlich umgekehrter Reihenfolge wieder auf. Diese umgekehrte Signalabfolge ist ein deutliches Zeichen für einen Fahrtrichtungswechsel, der umgehend nach Auftreten oder nach mehrmaliger Bestätigung dieses Signalmusters feststellbar ist und ggf. festgestellt wird. Die mehrmalige Detektion eines gleichen oder ähnlichen Musters reduziert den Einfluss von Fehlmessungen, beispielsweise durch Signalrauschen. Es ist denkbar, dass die Fahrtrichtung erst nach mehrmaligen Messungen bestätigt ausgegeben wird und/oder wenn der dazugehörige Vertrauensgrad V für eine Fahrtrichtung mindestens einen Schwellwert für beispielsweise 2, 3 oder 4 Messungen überschritten hat.

Ein vorliegendes Istsignalmuster (Istsignalabfolge) kann weiterhin als Sollsignalabfolge gespeichert werden, derart, dass das Sollsignalmuster kontinuierlich über der Zeit t, entsprechend dem in diesem Zeitabschnitt vorliegenden Signalmuster, verändert wird. Dieses dann aktuelle Signalmuster wird auch im Fall des Abstellens des Fahrzeugs F als Sollsignalmuster gespeichert. Sofern das Fahrzeug F ohne "Zündung an" , d.h. ohne dass die elektrische Energieversorgung des Fahrzeugs F im wesentlichen voll aktiviert ist, bewegt wird, beispielsweise durch Anschieben oder Rollen lassen, kann die Vorrichtung zur Fahrtrichtungserkennung E und ggf. auch ein zugehöriges Datenübertragungssystem durch die anliegenden Signale der Raddrehzahlsensoren R aus einem elektrischen Ruhezustand heraus geweckt werden, um kontinuierlich das Signalmuster der Raddrehzahlsensoren und/oder eine zurückgelegte Wegstrecke zu erfassen und/oder eine Positionsinformation zu ermitteln und abzuspeichern.

Wird das erfindungsgemäße Verfahren bei LKWs (Lastkraftwagen) angewendet, insbesondere bei mehrachsigen LKWs, können vorteilhaft 5 oder mindestens 6 Istsignale von Raddrehzahlsensoren R erfasst und ausgewertet werden. Diese werden vorteilhafterweise von nicht angetriebenen Achsen ausgewertet.

Generell scheint es vorteilhaft, das Verfahren zur Fahrtrichtungserkennung auszusetzen, sofern ein Schlupf an einem Rad detektiert wird oder ein Fahrzeugbremseingriff, beispielsweise durch ein ABS- (Anti-Blockiersystem), ESP- (Elektronisches Stabilitätsprogramm) oder ein ASR-(Antischlupfregelung) System verursacht, an mindestens einem Rad vorliegt. Bei einer derartigen Fahrsituation (z.B. bei Glatteis oder auf sandigem, rutschigem Untergrund) liegt höchstwahrscheinlich ein Schlupf zwischen Rad und Fahrbahn vor, der die Istsignalabfolge der Raddrehzahlimpulse verändert. Es ist auch denkbar, dass die Fahrtrichtungserkennung nach ABS-, ESP- oder ASR-Eingriff an den Fahrzeugrädern zurückgesetzt wird, d.h. sämtliche Parameter werden auf Null oder einen Standardwert gesetzt und die Fahrtrichtungserkennung beginnt von neuem. So ist beispielsweise eine Fahrsituation denkbar, in der das Fahrzeug F bei Hanganfahrt sich rückwärts bewegt und gleichzeitig die Antriebsräder auf sandigem Untergrund durchdrehen und das ASR-System im Regeleingriff ist. In dieser Fahrsituation kann sich die Istsignalabfolge sehr stark innerhalb eines Betrachtungszeitraumes ändern.

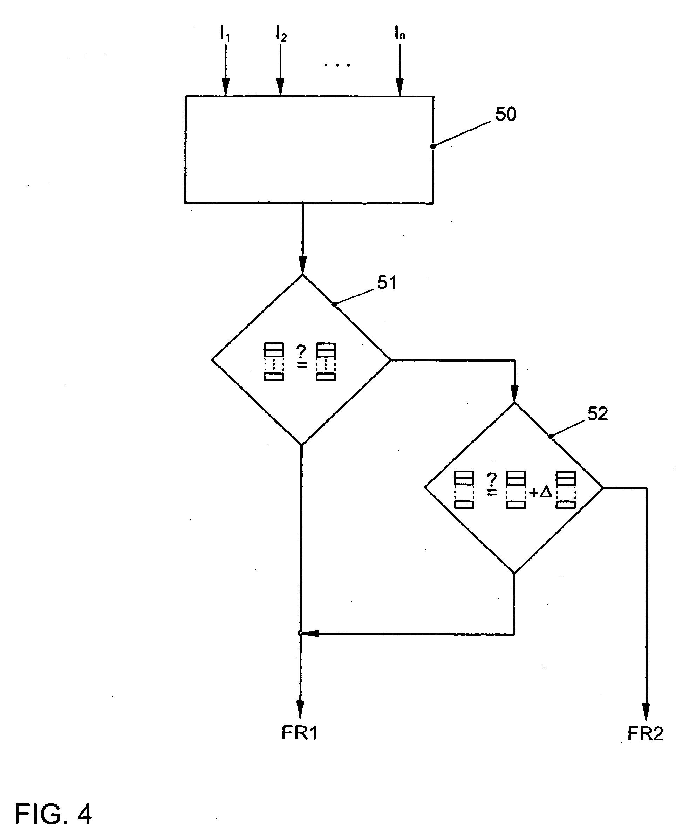

In Figur 4 ist eine schematische Darstellung des Verfahrensablaufs zur Fahrtrichtungserkennung dargestellt. In einem ersten Verfahrensschritt 50 werden Istsignale I1, I2 bis In von Raddrehzahlsensoren R erfasst und eingelesen. Die Istsignale liegen in der Regel als impulsförmige Signale oder als sogenannte Signalpeaks vor, da die Signale der Raddrehzahlsensoren R in der Regel induktiv erzeugt werden. Sofern die Signale nicht direkt bei Erfassung einem zugehörigen Zeitsignal zugeordnet werden, wird dies in Verfahrensschritt 50 vollzogen.

Die Signale werden in einem Speicher als Datensatz zwischengespeichert und in Verfahrensschritt 51 mit einer Sollsignalabfolge für eine Fahrtrichtung verglichen. Dieser Vergleich der Datensätze ist in Verfahrensschritt 51 symbolisch durch ein Gleichzeichen mit darübergesetztem Fragezeichen angedeutet. Die Datensätze sind durch Rechtecke mit Unterteilungen, die jeweils ein Datum symbolisieren, dargestellt. Sofern der Datensatz für die Istsignalabfolge gleich dem Datensatz für eine Fahrtrichtung ist, wird die Fahrtrichtung FR1 als ermittelte Fahrtrichtung ausgegeben. Der Datensatz für eine Fahrtrichtung ändert sich in der Regel in gewissen Zeitabständen, bedingt u. a. durch unterschiedliche Reifenumfänge oder Kurvenfahrten. Bei dem Vergleich wird dabei der jeweils gültige Datensatz herangezogen.

Sofern der Vergleich negativ ausfällt, wird optional in einem weiteren Verfahrensschritt 52 geprüft, ob die Abweichung eine geringfügige Abweichung ist. Dieser Vergleich ist in Verfahrensschritt 52 symbolisiert durch einen zusätzlichen Δ-Datensatz. Eine geringfügige Abweichung liegt beispielsweise vor, sofern sich die Istsignalabfolge nur durch eine zeitliche Vertauschung von zwei Istsignalen I1, I2, In von den Sollsignalen unterscheidet. Liegt eine geringfügige Abweichung von der Sollsignalabfolge vor, wird auch die Fahrtrichtung FR1 ausgegeben. Liegt eine größere Abweichung vor, wird ein Signal FR2 ausgegeben.

Bei dem Ausgabesignal FR2 kann es sich um die Ausgabeinformation handeln, mit der die entgegengesetzte Fahrtrichtung von FR1 festgestellt wird. Denkbar ist jedoch auch, dass sich optional mindestens ein weiterer Verfahrensschritt anschließt, in dem eine weitere Prüfung vorgenommen wird, und zwar mit der erfasst wird, ob es sich beispielsweise nur um eine vorübergehende, kurzzeitige Abweichung von der Sollsignalabfolge oder eine Störung in der Istsignalabfolge handelt. Es wird also mit anderen Worten das Signal für eine erkannte entgegengesetzte Fahrtrichtung erst nach mehrmaliger Bestätigung bzw. Überprüfung ausgegeben. So kann auch zusätzlich durch weitere Signale, beispielsweise durch ein Geschwindigkeitssignal, plausibilisiert werden, ob ein Richtungswechsel stattgefunden hat bzw. haben könnte. In diesem oder einem weiteren Verfahrensschritt kann auch zusätzlich ein Vertrauensgrad V für eine Fahrtrichtungsermittlung bestimmt werden, der angibt, mit welcher Wahrscheinlichkeit die Fahrtrichtungsangabe der tatsächlichen Fahrtrichtung entspricht.

Alternativ kann ein geänderter Fahrtrichtungswert auch erst nach Erreichen eines definierten Vertrauensgradschwellwerts größer Null ausgegeben werden, wobei höhere Werte einer höheren Wahrscheinlichkeit für eine bestätigte Fahrtrichtung entsprechen.

Bei dem vorgeschlagenen Verfahren kann der Zustand vorkommen, dass durch den Mustervergleich eine Fahrtrichtungsänderung detektiert wurde, die Absolutrichtung jedoch noch nicht ermittelt werden kann, da beispielsweise ein letztes Istsignalmuster nicht vorliegt oder ungültig ist. Dieses kann z. B. bei einer Fahrzeugwartung vorkommen, bei dem die Fahrzeugräder auf einer Hebebühne gegeneinander verdreht wurden.

Aus der Heranziehung weiterer Fahrzeuginformation, wie beispielsweise der Information des aktuell gewählten Ganges bei Geschwindigkeiten über einem Grenzwert. Dieser Vorgang zur Zuordnung des Istsignalmusters zur Fahrtrichtung ist jedoch jeweils nur einmalig notwendig, um eine Initialisierung vorzunehmen.

### Bezugszeichenliste

- α: Lenkwinkel
- E: Fahrtrichtungserkennung
- F: Fahrzeug
- FR1, FR2: Fahrtrichtungssignal
- I1, I2, In: Istsignal
- R: Raddrehzablsensoren
- t: Zeit
- t1, t2: Zeitpunkt
- Δt1: Zeitbereich
- V: Vertrauensgrad
- Vmax: maximaler Vertrauensgrad

- 1, 2: Bereich
- 11, 12, 13, 14, 131, 141, 21, 22, 23, 24,:
- 31, 32, 33, 34, 41, 42, 43, 44: Signal

## Patentansprüche

1. Verfahren zur Fahrtrichtungserkennung eines Kraftfahrzeugs (F) wobei mindestens ein Istsignal (I1, I2, In) von mindestens jeweils zwei, insbesondere drei oder vier, Raddrehzahlsensoren die jeweils unterschiedlichen Rädern (R) des Kraftfahrzeugs (F) zugehörig sind, erfasst wird, **dadurch gekennzeichnet, dass** die zeitliche Abfolge der erfassten Istsignale (I1, I2, In) zueinander gebildet wird, die Istsignalabfolge mit einer Sollsignalabfolge für mindestens eine Fahrtrichtung verglichen wird und in Abhängigkeit des Vergleichs die Fahrtrichtung bestimmt wird.

2. Verfahren zur Fahrtrichtungsbestimmung nach Anspruch 1, **dadurch gekennzeichnet, dass** die Fahrtrichtung bei Übereinstimmung oder bei Einhaltung einer maximal zulässigen Abweichung der Ist- mit der Sollsignalabfolge festgelegt wird.

3. Verfahren zur Fahrtrichtungserkennung nach einem der voranstehenden Ansprüche, **dadurch gekennzeichnet, dass** die Istsignalabfolge über mindestens zwei, insbesondere drei, vier oder fünf, Zyklen einer festgelegten Zeit oder festgelegten Anzahl von Istsignalen (I1, I2, In) mindestens eines Raddrehzahlsensors, insbesondere von zwei, drei oder mindestens vier Raddrehzahlsensoren erfasst werden.

4. Verfahren zur Fahrtrichtungserkennung nach Anspruch 3, **dadurch gekennzeichnet, dass** eine Anzahl von Zyklen zur Erfassung der Istsignalabfolge in Abhängigkeit einer Abweichung der Ist- von der Sollsignalabfolge bestimmt wird.

5. Verfahren zur Fahrtrichtungserkennung nach einem der Ansprüche 2 bis 4, **dadurch gekennzeichnet, dass** eine maximal zulässige Abweichung der Ist- von der Sollsignalabfolge abhängig von dem eingeschlagenen Lenkwinkel (α) des Kraftfahrzeugs (F) ist.

6. Verfahren zur Fahrtrichtungserkennung nach einem der voranstehenden Ansprüche, **dadurch gekennzeichnet, dass** bei Stillstand und/oder bei Abstellung der Zündung und/oder nach einer definierten Fahrtstrecke des Kraftfahrzeugs (F) eine der letzten Istsignalabfolgen als Sollsignalabfolge für die ermittelte Fahrtrichtung gespeichert wird.

7. Verfahren zur Fahrtrichtungserkennung nach Anspruch 6, **dadurch gekennzeichnet, dass** als Sollsignalabfolge für eine entgegengesetzte Fahrtrichtung die Abfolge in zeitlich umgekehrter Reihenfolge gespeichert wird.

8. Verfahren zur Fahrtrichtungserkennung nach einem der vorangehenden Ansprüche, **dadurch gekennzeichnet, dass** zur Fahrtrichtungserkennung nur Istsignale (I1, I2, In) von Raddrehzahlsensoren (R) von nicht angetriebener Fahrzeugachsen verwendet werden.

9. Verfahren zur Fahrtrichtungserkennung nach einem der vorangehenden Ansprüche, **dadurch gekennzeichnet, dass** die Fahrtrichtungserkennung bei einem aktiven ABS-, ASR- oder ESP-Eingriff an den Fahrzeugrädern ausgesetzt oder zurückgesetzt wird.

10. Vorrichtung zur Fahrtrichtungserkennung eines Kraftfahrzeugs (F),
- mit mindestens zwei, insbesondere mit mindestens drei oder vier, Raddrehzahlsensoren (R), die jeweils unterschiedlichen Rädern (R) des Kraftfahrzeugs (F) zugehörig sind,
- mit einer Auswerteeinrichtung (E),
**dadurch gekennzeichnet, dass** die Auswerteeinrichtung (E)
- Istsignale (I1, I2, In) der Raddrehzahlsensoren (R) erfaßt,
- eine Istsignalabfolge in Bezug auf das zeitliche Auftreten der Istsignale (I1, I2, In) zueinander bestimmt,
- die Istsignalabfolge mit einer Sollsignalabfolge vergleicht und
- die Fahrtrichtung in Abhängigkeit des Ergebnisses des Vergleichs bestimmt.

## Claims

1. Method for the identification of the direction of travel of a motor vehicle (F), wherein at least one actual signal (I1, I2, In) from at least, in each case, two, in particular three or four, wheel speed sensors, which are each associated with different wheels (R) of the motor vehicle (F), is acquired, **characterized in that** the time sequence of the acquired actual signals (I1, I2, In) with respect to one another is formed, the actual signal sequence is compared with a setpoint signal sequence for at least one direction of travel, and the direction of travel is determined as a function of the comparison.

2. Method for the identification of the direction of travel according to Claim 1, **characterized in that** the direction of travel is determined when the actual signal sequence corresponds to the setpoint signal sequence or a maximum permitted deviation of the actual signal sequence with respect to the setpoint signal sequence is complied with.

3. Method for the identification of the direction of travel according to one of the preceding claims, **characterized in that** the actual signal sequence is acquired over at least two, in particular three, four or five, cycles of a defined time or defined number of actual signals (I1, I2, In) of at least one wheel speed sensor, in particular of two, three or at least four wheel speed sensors.

4. Method for the identification of the direction of travel according to Claim 3, **characterized in that** a number of cycles for the acquisition of the actual signal sequence is determined as a function of a deviation of the actual signal sequence from the setpoint signal sequence.

5. Method for the identification of the direction of travel according to one of Claims 2 to 4, **characterized in that** a maximum permissible deviation of the actual signal sequence from the setpoint signal sequence is dependent on the steering angle (α) which has been set in the motor vehicle (F).

6. Method for the identification of the direction of travel according to one of the preceding claims, **characterized in that** when the vehicle is stationary
and/or when the ignition is switched off and/or after a defined distance travelled by the motor vehicle (F), one of the last actual signal sequences is stored as a setpoint signal sequence for the identified direction of travel.

7. Method for the identification of the direction of travel according to Claim 6, **characterized in that** the sequence is stored in the chronologically reversed order as a setpoint signal sequence for an opposing direction of travel.

8. Method for the identification of the direction of travel according to one of the preceding claims, **characterized in that** only actual signals (I1, I2, In) of wheel speed sensors (R) of non-driven vehicle axles are used for the identification of the direction of travel.

9. Method for the identification of the direction of travel according to one of the preceding claims, **characterized in that** the identification of the direction of travel is suspended or cancelled in the event of an active ABS, traction control or ESP intervention at the vehicle wheels.

10. Device for the identification of the direction of travel of a motor vehicle (F),
- having at least two, in particular having at least three or four, wheel speed sensors (R) which are each associated with different wheels (R) of the motor vehicle (F),
- having an evaluation device (E),
**characterized in that** the evaluation device (E)
- acquires actual signals (I1, I2, In) of the wheel speed sensors (R),
- determines an actual signal sequence with respect to the chronological occurrence of the actual signals (I1, I2, In) with respect to one another,
- compares the actual signal sequence with a setpoint signal sequence, and
- determines the direction of travel as a function of the result of the comparison.

## Revendications

1. Procédé de détection du sens de déplacement d'un véhicule automobile (F), au moins un signal réel (I1, I2, In) provenant d'au moins deux, notamment trois ou quatre, détecteurs de vitesse de rotation de roue respectifs qui sont respectivement associés à des roues (R) différentes du véhicule automobile (F), étant acquis, **caractérisé en ce que** la séquence dans le temps des signaux réels (I1, I2, In) entre eux est formée, la séquence des signaux réels est comparée avec une séquence des signaux de consigne pour au moins un sens de déplacement et le sens de déplacement est déterminé en fonction de la comparaison.

2. Procédé de détection du sens de déplacement selon la revendication 1, **caractérisé en ce que** le sens de déplacement est fixé s'il y a concordance entre les séquences des signaux réels et des signaux de consigne ou si un écart maximum admissible entre elles est respecté.

3. Procédé de détection du sens de déplacement selon l'une des revendications précédentes, **caractérisé en ce que** la séquence des signaux réels est acquise sur au moins deux, notamment trois, quatre ou cinq cycles ayant une durée donnée ou sur un nombre fixe de signaux réels (I1, I2, In) d'au moins un détecteur de vitesse de rotation de roue, notamment deux, trois ou au moins quatre détecteurs de vitesse de rotation de roue.

4. Procédé de détection du sens de déplacement selon la revendication 3, **caractérisé en ce qu'**un nombre de cycles d'acquisition de la séquence de signaux réels est déterminé en fonction d'un écart entre les séquences des signaux réels et des signaux de consigne.

5. Procédé de détection du sens de déplacement selon l'une des revendications 2 à 4, **caractérisé en ce qu'**un écart maximum admissible entre les séquences des signaux réels et des signaux de consigne dépend de l'angle de braquage (α) du véhicule automobile (F).

6. Procédé de détection du sens de déplacement selon l'une des revendications précédentes, **caractérisé en ce que** lors d'une immobilisation et/ou lors d'une coupure du contact et/ou après une distance parcourue définie du véhicule automobile (F), l'une des dernières séquences des signaux réels est enregistrée comme séquence des signaux de consigne pour le sens de déplacement déterminé.

7. Procédé de détection du sens de déplacement selon la revendication 6, **caractérisé en ce que** la séquence des signaux de consigne enregistrée pour un sens de déplacement opposé est la séquence dans l'ordre inverse.

8. Procédé de détection du sens de déplacement selon l'une des revendications précédentes, **caractérisé en ce que** seuls les signaux réels (I1, I2, In) des détecteurs de vitesse de rotation de roue (R) des essieux non motorisés du véhicule sont utilisés pour détecter le sens de déplacement.

9. Procédé de détection du sens de déplacement selon l'une des revendications précédentes, **caractérisé en ce que** la détection du sens de déplacement est suspendue ou réinitialisée en cas d'intervention active d'un ABS, ASR ou ESP au niveau des roues du véhicule.

10. Dispositif de détection du sens de déplacement d'un véhicule automobile (F),
- comprenant au moins deux, notamment trois ou quatre, détecteurs de vitesse de rotation de roue (R) qui sont respectivement associés à des roues (R) différentes du véhicule automobile (F),
- comprenant un dispositif d'interprétation (E), **caractérisé en ce que** le dispositif d'interprétation (E)
- acquiert des signaux réels (I1, I2, In) des détecteurs de vitesse de rotation de roue (R),
- détermine une séquence des signaux réels en référence à l'apparition dans le temps des signaux réels (I1, I2, In) les uns par rapport aux autres,
- compare la séquence des signaux réels avec une séquence des signaux de consigne et
- détermine le sens de déplacement en fonction du résultat de la comparaison.
